# EUROPEAN PATENT APPLICATION

(11) **EP 4 350 714 A1**
(43) Date of publication of application: **10.04.2024**
(21) Application number: 22810701.7
(22) Date of filing: 18.05.2022
(51) Int. Cl.: G21F 9/12, G21F 9/02, B01J 20/24

(54) **METHOD FOR TREATING TRITIUM AS WASTE FROM NUCLEAR OPERATIONS**

(30) Priority: 27.05.2021 ES 202130480
(71) Applicant: Nucleantech, S.L., 08330 Premià de Mar Barcelona (ES)
(72) Inventor: GRAU GIRONA, Ramón, 08302 Mataró (Barcelona) (ES); D'ACIERNO, Francesco, 10138 Torino (IT)
(74) Representative: REHBERG HÜPPE + PARTNER
(86) International application number: PCT/ES2022/070307
(87) International publication number: WO 2022/248749

(57) **Abstract**

The present invention relates to a method for treating tritium as waste from nuclear operations, wherein the method comprises the treatment of tritiated radioactive effluents with an adsorbent material made of cellulose filaments or microcrystalline cellulose that is non-water soluble or has negligible solubility, in order to incorporate tritium in the molecule of said cellulose filaments or microcrystalline cellulose, separate the tritiated adsorbent material from the treated effluent, and treat said tritium as a low and medium activity waste. The method comprises the incorporation of cellulose filaments or microcrystalline cellulose in the tritiated effluent until it reaches a concentration comprised between 0.6 and 3.4 gr/litre, and preferably between 1.1 and 1.6 gr/litre, of tritiated radioactive effluent.

## Description

### TECHNICAL FIELD OF THE INVENTION

The present invention falls within the technical field of decontamination of radioactive materials (gases, liquids, solids) from nuclear operations and, more specifically, of tritiated effluents.

### PRIOR ART

The chemical and physical characteristics of tritium as well as the different combination options in the formation of water molecules make it difficult, in the current state of the art, to use large-scale industrial separation systems. However, this situation does not imply that tritium treatment systems are not being developed. On the contrary, the number of articles and experimental processes for the treatment, capture and storage of tritiated species is increasing. This fact is also catalysed by the construction of fusion reactor prototypes.

Tritium is produced in the fission reactions of a nuclear reactor and can be diffused as a gas, as tritiated water molecules and as the very ions [O³₁H]⁺ and [O³₁H]⁻.

Tritium is a hydrogen isotope with a mass of 3.01605 g/mol and of the three isotopes, it is the only radioactive one. Its half-life is 12.33 years, one gram of tritium has an activity of 9619Ci and disintegrates according to:

₁³H → ₂³He+ e⁻ (β)+ v + 18.6 KeV

Tritium has the same chemical behaviour as deuterium and protium, since the chemical properties depend on the cortical electrons and this is why it is difficult to separate it chemically from other isotopic forms. Moreover, it is a net beta emitter, and from this point of view it facilitates the protection systems. At the level of industrial separation, the problems of separating the different tritiated species are determined by the close liquid-gas transition temperatures, an issue that requires long separation columns and extreme cryogenic temperatures.

Tritium (12.3-year period and specific emitter of only beta -β- radiation) is formed in nuclear fuels mainly by ternary fission, at a rate of 200,000 to 400,000 Ci/GW (e)-year. It is also caused by neutron activation of a series of lightweight elements present as impurities or as fuel components, coolant, moderator, sheaths and other nuclear material. At present it is possible to obtain it from already existing fission reactors that use heavy water (D₂O) as a moderator (CANDU, for example), as they produce T (tritium) when deuterium (D) captures a neutron. The heavy water from these reactors must be "cleaned" regularly; therefore, they represent a relatively regular source of Tritium, for example in Canada. Neutron poisons are an important source of tritium. Their mission consists of moderating the nuclear reaction from the absorption of neutrons. In PWR reactors, tritium is produced by the interaction of lithium-6 with neutrons, according to the reaction:

₃Li⁶ + ₀n¹ → ₂He⁴ + ₁H³ + γ

Lithium-6 is used in the form of LiOH with the ability to regulate pH in solution. On the other hand, boron-10 is used as a neutron adsorbent in the form of H₃BO₃ and thus regulates core reactivity. Lithium-6 also generates Li-7 by neutron absorption, evolving to tritium. In general, the most used neutron poisons are part of tritium sources.

In ternary fissions, tritium appears as a consequence of the following reactions:

²³⁵U + n → X₁ + X₂ + H₃

²³⁹Pu + n → X₁ + X₂ + H₃

In PWR-type reactors, both the moderator and the coolant operate at elevated temperatures and pressures, with the additional possibility of exchanging tritium therebetween by diffusion during normal operation of the plant and by mixing during shutdowns. The International Commission on Radiological Protection (ICRP) limits the dose for workers to an average, in five years, of 20 mSv (millisievert) per year. The high contribution of tritium to the total dose has encouraged the study, development and optimisation of tritium control technologies for operating reactors as well as for advanced designs. The values of tritium in the water of the PWR reactor are around 330 Bq/gr and the values of I-131 are around 9 Bq/gr.

The tritium that is generated in nuclear reactions is in the form of tritium gas [³₁H]₂ or mostly forming part of the water molecule in the form:

³₁H-OH (T-OH); H-O³₁H (H-OT); [³₁H]₂O (T₂O)

The reaction of tritium with oxygen produces tritiated water T₂O:

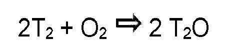

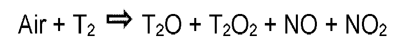

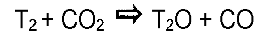

Chemical species present in the aqueous medium:

H₂O; T₂O; HTO; T₂O⁺; T₃O⁺; OT⁻; T₂O₂

A fundamental characteristic of tritium is the ease of exchange with protium; the equilibrium state depends on the acid-base reactions with the other chemical species in solution, the pH of the aqueous solution being decisive.

Taking into account that through the action of the neutron flux the protium atom can capture a neutron and become deuterium. Deuterium and tritium can associate to form other different aqueous structures. Taking into account that the tritium isotope is a net β emitter with a lifetime of 12.3 years, it can occur in any of the molecular structures, including the gaseous species, and this fact makes any attempt to separate it at an industrial level extremely difficult.

The different technical studies proposed worldwide to achieve an effective treatment on tritium emissions, in order to reduce the occupational dose and possible environmental contamination due to same, generally pointed out the following objectives, among others:
- Minimising tritiated water losses, as well as the recovery thereof in liquid and vapour state.
- Displacement of highly tritiated heavy water with heavy water having a low tritium content.

Different state-of-the-art processes proposed for separating tritium and tritiated water are described below, taking into account that the articles and laboratory tests on this subject are continuously growing due to the management of tritium in fusion reactors and the management of tritiated water in conventional and decommissioning processes at Nuclear Power Plants.

### a) Formation of Hydrides

Hydrogen gas and therefore T₂ react at high temperature with transition metals forming hydrides; scandium, yttrium, lanthanum, actinides and especially the elements of the titanium and vanadium group.

The most efficient manner to capture hydrogen to form hydrides is with uranium, but for reasons related to the use of uranium, the Zr-Co alloy is used reversibly according to:
Adsorption: 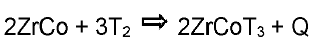
Desorption:

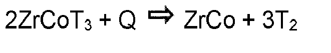

The problem with this compound is the lack of stability and the thermal decomposition thereof according to:

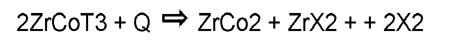

The use of hydrides offers a possibility for containing T₂. There are operational processes developed by Professor T.Motyka for the confinement of tritium (T₂) with hydrides.

### b) Bed of particles.

The company Molecular Separations, Inc (MSI) has developed a patent for a bed of particles that selectively charges tritiated water as hydration water at near ambient temperatures. The tests were carried out with a standard mixture of 126µCi tritium/litre of water. Reductions to 25 µCi tritium/litre of water using 2-metre long columns in series were shown. Hanford wastewater samples were used indicating a reduction of tritium from 0.3µCi tritium/litre of water to 0.07µCi tritium/litre of water. The tritium fixed on the beds can be released with a moderate increase in temperature and the beds can be reused. A mobile bed process has been proposed to treat representative amounts of wastewater. The separation system has also been shown to reduce tritium concentrations in cooling water to levels that allow for its reuse.

### c) Tritium adsorption.

Studies related to the adsorption of tritium and the treatment of tritiated liquid effluents have been carried out for a few years at the Belgian Centre for Nuclear Research SCK/CEN. Initially, the studies focused on the removal of tritium from the gaseous effluents created in the reprocessing processes. If tritium can be released from spent fuel prior to any aqueous operation, the most practical collection method is adsorption on molecular sieves, after isotopic solution with hydrogen and subsequent complete transformation to tritiated water.

SCK/CEN has built a 15 m³/h oxidation-adsorption unit with a closed regeneration system and with a decontamination factor of 1000 at total tritiated hydrogen and water inlet concentrations up to 1000 parts per million by unit volume. SCK/CEN is developing an isotope separation process called ELEX based on combining water electrolysis and tritium exchange between hydrogen and water, the exchange being promoted by a hydrophobic catalyst.

For electrolysis under normal conditions, an elemental tritium separation factor of 11.6 with a standard deviation of 6% was obtained. As regards interchangeability, a hydrophobic catalyst has been developed that yields an overall exchange rate constant of 9 mol/s.m³ in a countercurrent drip bed reactor for the flow rates used at atmospheric pressure and at 20°C. The installation of this pilot plant consists of two essential parts: an 80kW water electrolyser and a 10 cm diameter drip bed column. The tritiated water feed rate is 5 l/h, which contains a tritiated aqueous phase of 3.7GBq/l of tritium activity.

### d) Multiple bipolar electrolytic separation of hydrogen isotopes.

By means of the multiple bipolar electrolytic separation of hydrogen isotopes by Pd/Ag electrodes (25% Pd), the possibility of separating tritium and tritiated species from different types of effluents was proven. Bipolar processes were achieved experimentally by cascading individual cells in which each bipolar electrode was from the same area as others, in a series arrangement. The factors measured for H-D multibipolar separation were close to the values measured in single-step cell measurements; for H-T separation, the leakage between steps reduced the measured separation factor. However, in both cases a separation of sufficient magnitude was achieved to demonstrate the feasibility of a real application in the extraction of tritium from large volume systems with a high current density.

### e) Cryogenic distillation.

In this option, there must be a step prior to distillation, an electrolytic process that transforms tritiated water into H₂, T₂ gas molecules and in the case of deuterium if any. These gases can be stored on titanium beds. This distillation process is carried out at 24K and is one of the proven methods for the enrichment and separation of hydrogen isotopes on an industrial scale, having a good separation factor on an industrial scale. The drawbacks of this type of plant reside in the high energy cost to maintain extreme cryogenic temperatures and, on the other hand, the high tritium inventory content.

### DETAILED DESCRIPTION OF THE INVENTION

The present invention proposes an alternative and different method to all the previous methods for the treatment of tritiated radioactive effluents, focusing its attention on liquid effluents and gaseous effluents, including vapour phases from evaporations. This treatment translates into a greater simplification of operations, a lower cost, operability at ambient temperature and the containment of tritium in a stable matrix.

More specifically, the invention provides a method for treating tritium using cellulose filaments or microcrystalline cellulose (MCC) as adsorbent material; both products have proven their effectiveness when suitably used according to the present invention. This method achieves significant environmental benefits, especially with regard to the treatment of tritiated radioactive effluents, liquid and gaseous.

The mentioned products are commercial products that are on the market and have been used for decades in other sectors, for example: for the manufacture of adhesives, plastics and composites, paints and coatings, hygiene and personal care products, food and beverages, pharmaceutical and health products.

This invention patent proposes the use of cellulose filaments or microcrystalline cellulose, that is non-water soluble or has negligible solubility, as an adsorbent for the treatment of radioactive effluents (liquid, gaseous) containing tritium and other radioactive isotopes.

Cellulose fibre is a polycrystalline aggregate containing crystalline and amorphous components, i.e., it comprises different amorphous and crystalline regions, which alternate in the molecular structure. While pure cellulose has a semicrystalline structure, hemicelluloses and lignin are amorphous substances. The content of ordered fibres is a quality of cellulose, the smallest fibrillar unit detected having a size of 3 - 3.5 nm, while the microfibre clusters have a size of 25 nm.

Cellulose is a linear polymer the basic unit of which is D-glucose that is successively linked through a glycosidic bond in the β-(1,4) configuration to form cellobiose molecules, a cellulose repeating unit. Each structural unit (β-D-Glucopyranose) contains three free hydroxyl groups, one primary and two secondary groups. Cellulose molecules have a strong tendency to form inter- and intramolecular bonds. The existence of these bonds has a high impact on the reactivity of cellulose. Intermolecular bonds generate a tertiary structure, which implies a high crystallinity. High crystallinity areas are difficult for reagents to penetrate, whereas amorphous structures are susceptible to a high reactivity.

Amorphous and crystalline structures have a great impact on cellulose properties and behaviour. Acting on crystallinity, the degree of amorphous structure, the specific accessible surface, and the sizes of the fibre pores, it is possible to modulate these properties.

The proposal of this invention is based on an exchange between the structures of cellulose filaments or microcrystalline cellulose, used as adsorbent material, and the tritium isotope, especially with the hydroxyl groups that make up the cellulosic structure, using predetermined concentrations of said adsorbent material, and regardless of the forms in which tritium is present:

T₂O; HTO; T₂O⁺; T₃O⁺; OT⁻; T₂O₂

Cellulose filaments or microcrystalline cellulose (amorphous or glassy) in contact with radioactive effluents (liquid, gaseous) containing tritium and other radioactive isotopes incorporate tritium into their molecule and allow its removal from the solution by means of filtering (HEPA, conventional cellulose filters, micro and ultrafiltration, activated carbon, etc.).

The removal of the tritiated cellulose filaments, or the tritiated microcrystalline cellulose, allows this tritiated adsorbent material to be treated as low and medium activity waste in small volume and the treated effluent to be released from activity.

### BRIEF DESCRIPTION OF THE DRAWINGS

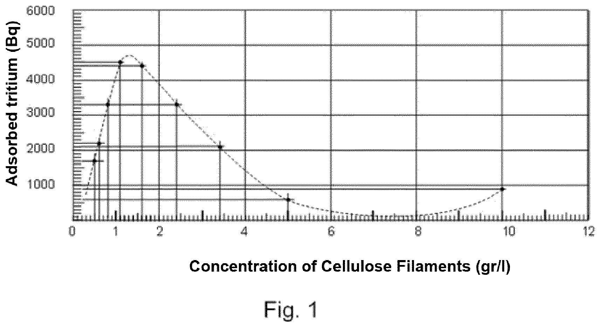

**Figure** 1 shows a graph of tritium adsorption (Bq) using cellulose filaments as adsorbent material.

### DESCRIPTION OF EMBODIMENTS OF THE INVENTION

The use tests were carried out in two steps.

The first step consists of a preliminary method to determine the dose of cellulose material to be used. From reasonable volumes, depending on the activity risk involved in the test, in this case with volumes between 100 ml and 500 ml of effluent (tritiated water), a series of stirring tests were carried out with different samples and varying amounts of cellulose filaments and microcrystalline cellulose in order to establish the precise amount of cellulose material required to adsorb tritium in solution; obtaining positive results with both adsorbent materials.

As shown in the table below and in the graph in Figure 1, in this first step it has been determined that the amount of tritium adsorbed (becquerel - Bq-) does not vary uniformly depending on the concentration of cellulose filaments used; rather, the amount of adsorbed tritium increases surprisingly in certain concentrations of adsorbent material, specifically:
- it exceeds 2000 Bq using a concentration of cellulose filaments comprised between 0.6 and 3.4 gr/litre of tritiated water;
- it exceeds 3000 Bq using a concentration of cellulose filaments comprised between 0.8 and 2.4 gr/litre of tritiated water and,
- it reaches a maximum, above 4400 Bq, using a concentration of cellulose filaments, or microcrystalline cellulose, comprised between 1.1 and 1.6 gr/litre of effluent or tritiated water.

| TRITIUM ADSORPTION | |
|---|---|
| Concentration of cellulose filaments (gr/l) | Adsorbed Tritium Activity (Bq) |
| 0.5 | 1700 |
| 0.6 | 2200 |
| 0.8 | 3000 |
| 1.1 | 4500 |
| 1.6 | 4400 |
| 2.4 | 3300 |
| 3.4 | 2100 |
| 5.0 | 600 |
| 10 | 900 |

The amount of tritium adsorbed drops rapidly when the concentration of adsorbent falls below or above the range mentioned initially, i.e., from 0.6 to 3.4 gr/litre of effluent or tritiated water.

The second step includes the treatment of tritiated effluents of industrial volume, using the previously determined concentration of cellulose filaments. It has been determined that under normal conditions the dosage will be set between 0.6 and 3.4 g/litre and preferably between 1.1 and 1.6 g/litre of adsorbent per effluent or tritiated water with an activity between 100 and 40,000 Bq/gram.

In the present invention, two methods are proposed for the treatment of liquid tritiated effluents: contaminated water from the cooling circuit of the reactor, evaporation condensates, cleaning waters, etc., as they are typically generated in nuclear power plants and are stored in appropriate tanks for their treatment; and a filtration method of smoke, gases or vapours coming from tanks or confined areas of the nuclear power plant.
A.- Treatment in a stirred tank of the tritiated radioactive effluent, by incorporating into said tank a predetermined volume of tritiated radioactive effluent, at treatment temperature (Interval: 15°C-100°C), and of adsorbent material, consisting of cellulose filaments or microcrystalline cellulose, until it reaches the concentration stipulated in the preliminary method. The reaction time is comprised between 1 and 10 hours and, preferably, between 2 and 5 hours.
   After the time of stirring and reaction of the contents of the tank, the water is extracted by filtration through ultrafiltration membranes (capillary or hollow fibre). The spent adsorbent material is managed as low and medium activity waste. The separated material is managed according to a typical method as low and medium activity waste.
B.- Treatment by recirculation of the radioactive effluent on a fluidised bed, recirculating the tritiated water contained in a lung tank through one or more containers which have the cellulose filaments or microcrystalline cellulose -used as adsorbent material- inside a cellulose or polypropylene filter bag with a pore size between 1 and 20 microns, which is used to retain the adsorbent material and allows the treated and decontaminated effluent to pass through. Once the adsorbent material is exhausted and sufficient time has elapsed to achieve the established reduction of water activity in the lung tank, the decontaminated water is emptied and finally the tritiated adsorbent material is extracted from the containers and managed according to a common method as low and medium activity waste. Recirculation occurs until optimum activity values are obtained, at which time the treated water will be discharged and the adsorbent material will be managed.
C.- Treatment of smoke, gases and vapours containing tritium, comprising the passage of said effluents through cellulose filaments or microcrystalline cellulose introduced into filter sleeves with a pore size between 1 and 100 microns, followed by filtration in HEPA filters; once exhausted, the adsorbent material will be disposed of according to a common method in nuclear power plants for low and medium activity radioactive material.

Having sufficiently described the nature of the invention, as well as an exemplary preferred embodiment, it is stated for the appropriate purposes that the materials, shape, size and arrangement of the elements described may be modified, provided that this does not imply an alteration of the essential features of the invention that are claimed below.

## Claims

1. A method for treating tritium as waste from nuclear operations, **characterised in that** it comprises the treatment of tritiated radioactive effluents with an adsorbent material made of cellulose filaments or microcrystalline cellulose, that is non-water soluble or has negligible solubility, in order to incorporate tritium in the molecule of said cellulose filaments or microcrystalline cellulose; separate the tritiated adsorbent material from the treated effluent and, treat said tritium as a low and medium activity waste.

2. The method, according to claim 1, **characterised in that** it comprises the incorporation of cellulose filaments or microcrystalline cellulose in the tritiated effluent until it reaches a concentration comprised between 0.6 and 3.4 gr/litre, and preferably between 1.1 and 1.6 gr/litre, of tritiated radioactive effluent.

3. The method, according to claim 2, **characterised in that** it comprises: - the incorporation into a stirred tank of a predetermined volume of tritiated radioactive effluent, and of the adsorbent material, consisting of cellulose filaments or microcrystalline cellulose, until it reaches the indicated concentration, - stirring of the contents of the tank and, - separation by filtering through ultrafiltration membranes of the treated effluent and finally the extraction of the used adsorbent material that retains the radioactive activity.

4. The method, according to any of claims 1 and 2; **characterised in that** it comprises the treatment by recirculation of the radioactive effluent on a fluidised bed, through containers which contain the cellulose filaments or microcrystalline cellulose inside a cellulose or polypropylene filter bag, with a pore size between 1 and 20 microns which is used to retain the adsorbent material and allows the treated and decontaminated water to pass through; once the adsorbent material is exhausted, it is extracted and managed as low and medium activity waste.

5. The method, according to claim 1, **characterised in that** the treatment of gaseous effluents, like smoke, gases and vapours, containing tritium comprises the passage of said effluents through cellulose filaments or microcrystalline cellulose introduced into filter sleeves with a pore size between 1 and 100 microns, and followed by filtration in HEPA filters.
